# EUROPÄISCHE PATENTSCHRIFT

(11) **EP 3 675 296 B1**
(45) Veröffentlichungstag und Bekanntmachung des Hinweises auf die Patenterteilung: **09.04.2025**
(21) Anmeldenummer: 19213043.3
(22) Anmeldetag: 03.12.2019
(51) Int. Cl.: H01T 4/06, H01R 25/14, H02B 1/21

(54) **ÜBERSPANNUNGSABLEITERANORDNUNG MIT IN EINEM GEMEINSAMEN GEHÄUSE BEFINDLICHEN, VORKONFEKTIONIERTEN UND ELEKTRISCH VERSCHALTETEN ÜBERSPANNUNGSABLEITERN**
OVERVOLTAGE ARRESTER ARRANGEMENT WITH PRE-CONFECTED AND ELECTRICALLY SWITCHED OVERVOLTAGE DIVERTERS LOCATED IN A COMMON HOUSING
AGENCEMENT DE PROTECTION DE SURTENSION DOTÉ D'UN PROTECTEUR DE SURTENSION CONNECTÉ ÉLECTRIQUEMENT ET PRÉFABRIQUÉ, SE TROUVANT DANS UN BOÎTIER COMMUN

(30) Priorität: 27.12.2018 DE 102018133631; 12.02.2019 DE 102019103531
(43) Veröffentlichungstag der Anmeldung: 01.07.2020
(73) Patentinhaber: DEHN SE, 92318 Neumarkt i.d. OPf. (DE)
(72) Erfinder: HIERL, Stephan, 92318 Neumarkt (DE); SPANGLER, Patrick, 93152 Undorf (DE); DUERR, Dietmar, 92318 Neumarkt (DE); WEISSFLOG, Michael, 92360 Mühlhausen (DE)
(74) Vertreter: Prinz & Partner mbB

(56) Entgegenhaltungen:
- EP-A1- 1 463 074
- WO-A1-2016/037596
- DE-A1- 102005 049 873
- DE-A1- 4 000 717
- DE-C1- 10 001 667
- DE-U1- 202018 101 464
- DE-U1- 202018 104 832

## Beschreibung

Die Erfindung geht aus von einer Überspannungsableiteranordnung mit in einem gemeinsamen Gehäuse befindlichen, vorkonfektionierten und elektrisch verschalteten Überspannungsableitern, wobei zur unmittelbaren Montage auf einem standardisierten Sammelschienensystem mit mehreren Stromschienen am Gehäuse kupplungsartige Mittel zum elektrischen und mechanischen Verbinden vorgesehen sind, wobei diese Mittel Federelemente und eine Verrastung aufweisen und das Gehäuse sich in seiner Längsrichtung über die mehreren Stromschienen erstreckt, gemäß Oberbegriff des Anspruches 1.

Aus der DE 10 2004 037 083 A1 ist eine Überspannungsableiteranordnung mit einer als Bestandteil eines Gehäuses ausführbaren Trägerplatte vorbekannt.

Die Überspannungsableiter, welche insbesondere zum Schutz von Niederspannungs-Versorgungssystemen ausgelegt sind, werden elektrisch vorkonfektioniert auf der Trägerplatte fixiert und sind mit externen Anschlussmitteln versehen. Die Trägerplatte kann hierbei Bestandteil eines Gehäuses sein.

Gemäß der vorbekannten Lösung sind zur unmittelbaren Montage auf einem Sammelschienensystem mit mehreren Stromschienen an oder in der Unterseite der Trägerplatte oder des Gehäuses im Rasterabstand des Sammelschienensystems kupplungsartige Mittel zum elektrischen und mechanischen Verbinden vorgesehen.

Ein Vorteil der bekannten Lösung besteht darin, dass eine Installation von Überspannungsschutzgeräten direkt auf das Schienensystem ohne externe Anschlusskabel möglich wird. Dies stellt eine geringe Anschlussinduktivität sicher. Während des Ableitvorganges treten auch bei größten Stoßstromwerten nur geringe induktive Spannungsabfälle auf.

Das bekannte Kupplungssystem benötigt keine Hilfswerkzeuge. Die mechanische Fixierung und die elektrische Kontaktierung der Schutzgeräte erfolgt durch Verrasten der Kontaktelemente mit dem Stromschienensystem, was zu kurzen Montagezeiten führt.

In einer Ausführungsform umfassen die kupplungsartigen Mittel Federelemente und mindestens eine Verrastung.

Die DE 10 2005 049 873 A1 beschreibt eine Weiterbildung der in der DE 10 2004 037 083 A1 beschriebenen Überspannungsableiteranordnung, in denen den kupplungsartigen Mitteln jeweils eine Stromzuführungs-/Abgangsklemme zum Anschluss äußerer Leitungen zugeordnet ist. Auf diese Weise kann ein Stromschienensystem, auf das die Überspannungsableiteranordnung aufgesetzt ist, direkt mittels der Überspannungsableiteranordnung elektrisch versorgt werden.

Bekannt ist weiterhin ein Sammelschienensystem nach DE 200 04 593 U1. Das Sammelschienensystem umfasst mehrere Stromschienen, die mittels eines Überspannungsableiters mit einem Bezugspotential verbindbar sind. Das System zeichnet sich durch eine quer auf die Stromschiene aufsetzbare Adapterbrücke aus, die für die Kontaktierung der Stromschiene einen stoßstromfesten Kontakt hat und welche mindestens einen Steckplatz aufweist, der zumindest einen elektrisch mit dem Kontakt der Stromschiene verbundenen Steckkontakt umfasst. Ein Überspannungsableiter ist als Steckmodul zur entsprechenden Aufnahme in dem Steckplatz der Adapterbrücke ausgebildet und weist wenigstens einen mit dem Steckkontakt in Eingriff bringbaren Gegenkontakt sowie ferner einen Bezugspotentialanschluss auf, der mit dem Bezugspotential der Anlage verbindbar ist.

Bei bekannten Hutschienensystemen erfolgt die mechanische Arretierung über ein geeignetes Rastsystem. Die entsprechenden mechanischen Abmessungen von Hutschienen sind standardisiert. Ebenso ergibt sich eine standardisierte räumliche Ausdehnung von elektrotechnischen Komponenten, die mittels Hutschienensystem zum Beispiel in einem Hausanschlusskasten untergebracht und dort mechanisch befestigt werden können.

Weitere Geräte wie beispielsweise Sicherungen, Federeinsätze, FI-Schalter, Leitungsschutzschalter oder dergleichen können ebenfalls aneinandergereiht auf den Hutschienen montiert werden. Eine Verbindung der entsprechenden elektrotechnischen Komponenten erfolgt üblicherweise über Kabel oder mittels Kammschienen.

Die DE 20 2018 101464 U1 zeigt eine Überspannungsschutzeinrichtungs-Anordnung mit einer Trageeinrichtung, die auf ein Sammelschienensystem aufgesetzt ist. Die Trageeinrichtung verfügt über Steckplätze, in die eine oder mehrere Überspannungsschutzeinrichtungen SPD eingeführt werden können.

Die WO 2016/037596 A1 offenbart eine modulare Überspannungsschutzvorrichtung mit einem Basisteil, in welchem mindestens ein Schutzelement angeordnet ist und das über ein Befestigungsteil auf eine Hutschiene montiert werden kann. Ferner ist ein aufsetzbares Modul mit einer Zündeinrichtung vorgesehen, welches über Kontakte auf einer zum Befestigungsteil entgegensetzten Seite des Basisteils mit diesem verbunden werden kann.

Aus der DE 100 01 667 C1 ist ein mehrpoliger Überspannungsableiter mit einem U-förmigen Basisteil bekannt, in das Schutzelemente eingesetzt und über Anschlussklemmen kontaktiert werden können.

Die EP 1 463 074 A1 beschreibt eine Anordnung aus einem ersten und einem zweiten Modul, wobei das erste Modul durch ein mehrphasiges Schaltgerät gebildet ist, das auf ein Sammelschienensystem aufgesteckt ist. Das Schaltgerät ist beispielsweise ein Lasttrennschalter mit zylindrischen Sicherungen. Das zweite Modul umfasst mehrere Einrichtungen für den Überspannungsschutz, die in Vertiefungen eines Gehäuseoberteils aufgenommen sind. In einem Gehäuseunterteil sind ferner Vertiefungen vorgesehen, in die Hülsen mit Klemmschrauben eingesetzt werden, um einen Leiter zu fixieren.

Überspannungsableiteranordnungen mit in einem gemeinsamen Gehäuse befindlichen, vorkonfektionierten und elektrisch verschalteten Überspannungsableitern benötigen aufgrund der Komplexität und der hohen Anforderungen an den Überspannungsschutz Baugruppen und Bauteile, die ein nicht unerhebliches Gehäusevolumen für die entsprechende Ableiteranordnung nach sich ziehen.

Werden derartige Überspannungsableiteranordnungen mit entsprechendem Gehäuse und den bereits erwähnten kupplungsartigen Mitteln zum elektrischen und mechanischen Verbinden unmittelbar auf einem Sammelschienensystem angeordnet, ist in vielen Fällen der verbleibende Raum zum Montieren weiterer Komponenten auf dem betreffenden Sammelschienensystem nicht mehr ausreichend.

Aus dem Vorstehenden ist es Aufgabe der Erfindung, eine weiterentwickelte Überspannungsableiteranordnung mit in einem gemeinsamen Gehäuse befindlichen, vorkonfektionierten und elektrisch verschalteten Überspannungsableitern anzugeben, welche zur unmittelbaren Montage auf einem standardisierten Sammelschienensystem mit mehreren Stromschienen geeignet ist, wobei eine Möglichkeit geschaffen werden soll, eine platzsparende Integration von verschiedenen elektrotechnischen Komponenten im Sammelschienensystem zu ermöglichen. Damit soll der insbesondere im Bereich von Haus- und Bürogebäudeversorgungen bestehende Platzmangel im Bereich der Einspeisung beseitigt werden.

Die Lösung der Aufgabe der Erfindung erfolgt durch eine Überspannungsableiteranordnung gemäß der Merkmalskombination nach Anspruch 1, wobei die Unteransprüche mindestens zweckmäßige Ausgestaltungen und Weiterbildungen darstellen.

Demnach wird von einer Überspannungsableiteranordnung mit in einem gemeinsamen Außengehäuse befindlichen, vorkonfektionierten und elektrisch verschalteten Überspannungsableitern ausgegangen. Im Gehäuse können weitere elektronische Komponenten, wie beispielsweise Triggerschaltungen, Fernanzeigen, Abtrennvorrichtungen oder dergleichen untergebracht sein.

Die Überspannungsableiteranordnung ist zur unmittelbaren Montage auf einem standardisierten Sammelschienensystem mit mehreren Stromschienen geeignet und besitzt insofern am Gehäuse, insbesondere an der Gehäuseunterseite, kupplungsartige Mittel zum elektrischen und mechanischen Verbinden. Diese Mittel weisen Federelemente und eine Verrastung auf. Das Gehäuse ist derart, zum Beispiel rechteck- oder quaderförmig, ausgebildet, dass es sich in seiner Längsausdehnung über mehrere Stromschienen erstreckt.

Erfindungsgemäß weist mindestens über einen Längsausdehnungsabschnitt des Gehäuses dieses einen Breitenrücksprung auf. Der Breitenrücksprung ist so umgesetzt, dass er einen Freiraum bildet, welcher mindestens eine von der Überspannungsableiteranordnung funktional getrennte elektrotechnische Komponente aufnehmen kann.

Bei einer ersten Ausführungsform ist der Freiraum bis zu den Stromschienen geführt, so dass die betreffende elektrotechnische Komponente unmittelbar mit den Stromschienen verbunden werden kann.

Bei einer Weiterbildung der Erfindung verfügt der Freiraum über mindestens einen stufenförmigen Absatz, welcher als Bestandteil des Gehäuses die Stromschienen mindestens teilweise überdeckt, wodurch eine elektrische Isolation zu den Stromschienen geschaffen ist. Diese Isolation kann entweder über das Isolationsmaterial des Gehäuses oder über einen entsprechenden Abstand zwischen der eingesetzten elektrotechnischen Komponente und der entsprechenden Stromschienenoberfläche umgesetzt werden.

Bei dieser Ausführungsform können im oder am stufenförmigen Absatz Mittel zum Befestigen der elektrotechnischen Komponente vorgesehen sein.

Ein solches Mittel kann zum Beispiel ein hutschienenähnliches Profil umfassen. Demnach wäre es möglich, solche elektrotechnischen Komponenten in den Freiraum einzusetzen und dort zu fixieren, die an ihrer Bodenseite Klemm- oder Rastmittel besitzen, die ansonsten zur unmittelbaren Montage auf einem Hutschienensystem geeignet sind. Derartige Mittel sind dem Fachmann hinlänglich bekannt und müssen hier nicht näher ausgeführt werden.

Die elektrotechnischen Komponenten können zum Beispiel als Leitungsschutzschalter, als Leitungssicherungsautomat, Überstromschutzeinrichtungen für die Steuer- und Kommunikationstechnik, Leistungsmessgerät, WLAN-Adapter, Funkmodul, Antennenstrahler oder dergleichen ausgebildet sein.

Erfindungsgemäß ist darüber hinaus ein Aneinanderreihen mehrerer Überspannungsableiteranordnungen auf einem Sammelschienensystem, wobei die jeweiligen Freiräume ein Einstecken der jeweiligen elektrotechnischen Komponente von oben in den betreffenden Freiraum hinein ermöglichen. In diesem Fall besteht die Möglichkeit, auch nachträglich, zum Beispiel im Störungsfall eine entsprechende elektrotechnische Komponente auszutauschen, ohne dass ein Entfernen der entsprechenden Überspannungsableiteranordnung notwendig wird.

Grundsätzlich besteht die Möglichkeit, dass die eingesetzten elektrotechnischen Komponenten mit der jeweiligen Gehäusekontur, insbesondere oberseitig, bündig abschließen.

Alternativ kann aber auch die jeweils eingesetzte elektrotechnische Komponente bezogen auf die oberseitige Gehäusestruktur überstehen, so dass eine einfache Betätigung oder ein Austausch durch Schaffung ausreichender Griffflächen an der Komponente möglich wird.

Der jeweilige Freiraum kann eine Gestalt aufweisen, welche der Kontur der elektrotechnischen Komponente komplementär ist, so dass eine räumlich geometrisch eindeutige und korrekte Zuordnung beim Einbringen der elektrotechnischen Komponente in den jeweiligen Freiraum gegeben ist.

Der erläuterte Breitenrücksprung zur Bildung des Freiraums kann einseitig am Gehäuse aber auch an zwei gegenüberliegenden Seiten des Gehäuses vorgesehen sein.

Die Erfindung soll nachstehend anhand von Ausführungsbeispielen sowie unter Zuhilfenahme von Figuren näher erläutert werden.

Hierbei zeigen:

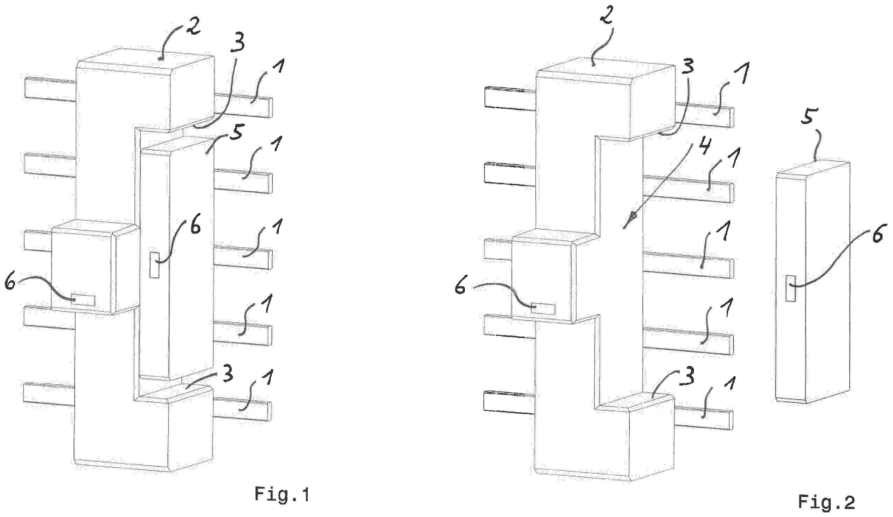

Fig. 1 und 2 eine Darstellung eines ersten Ausführungsbeispieles der erfindungsgemäßen Lösung mit einem Freiraum, gebildet durch einen Breitenrücksprung im Gehäuse einer Überspannungsableiteranordnung, welcher bis zu den Stromschienen führt, wobei die Fig. 1 und 2 verdeutlichen, wie in den Freiraum eine zusätzliche elektrotechnische Komponente einbringbar ist; und

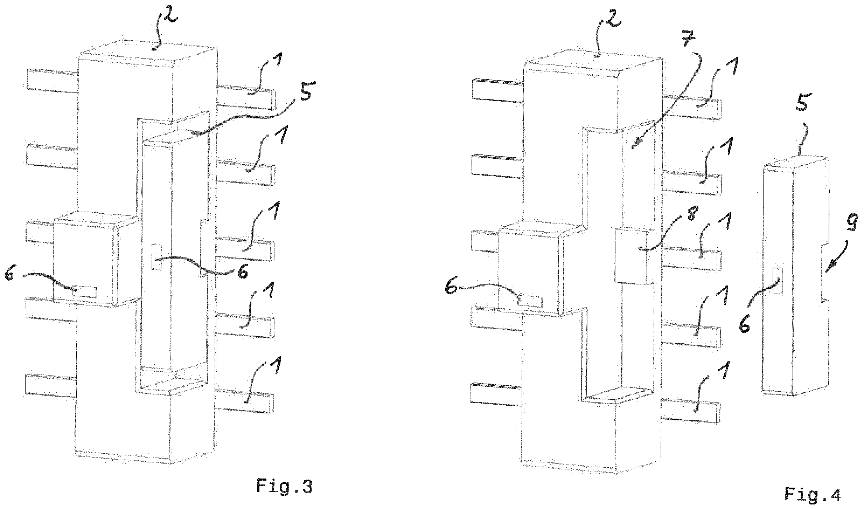

Fig. 3 und 4 eine Darstellung ähnlich derjenigen nach den Fig. 1 und 2, jedoch mit dem Unterschied, dass der Freiraum über einen stufenförmigen Absatz verfügt, welcher als Bestandteil des Gehäuses die Stromschienen überbrückt, um eine elektrische Isolation zu der in dem Freiraum einbringbaren elektrotechnischen Komponente zu schaffen.

Bei den Figuren 3 und 4 ist eine Befestigung der elektrotechnischen Komponente mittels Formschluss möglich, indem im Bereich des Bodens des Freiraumes ein Rastvorsprung ausgebildet ist, der zum Beispiel ein Profil aufweist, welches einer klassischen Hutschiene entspricht. Demgegenüber weist die Unterseite der elektrischen Komponente eine komplementäre Ausnehmung auf, um eine entsprechende Verbindung in mechanischer Hinsicht zu erzielen.

Die Figuren umfassen jeweils die Darstellung eines Sammelschienensystems umfassend mehrere in einem Rasterabstand ausgebildete einzelne Sammelschienen 1.

Eine Überspannungsableiteranordnung 2, welche in ihrem Gehäuse üblicherweise mehrere intern verschaltete Überspannungsableiter aufweist, verfügt über (nicht dargestellte) kupplungsartige Mittel zum elektrischen und mechanischen Verbinden bezüglich der Sammelschienen 1.

Das Gehäuse der Überspannungsableiteranordnung 2 erstreckt sich bezogen auf seine Längsrichtung über mehrere der Stromschienen 1, wobei hier im Regelfall ein bezogen auf die Längsachse rechter Winkel eingehalten wird.

Wie aus den Figuren 1 und 2 ersichtlich, weist das Gehäuse der Überspannungsableiteranordnung 2 einen Breitenrücksprung 3 auf, derart, dass ein Freiraum 4 (mit Pfeildarstellung symbolisiert) gebildet ist.

Der Freiraum 4 ist in der Lage, mindestens eine, von der Überspannungsableiteranordnung 2 funktional getrennte elektrotechnische Komponente 5 aufzunehmen.

Bei dieser elektrotechnischen Komponente 5 kann es sich beispielsweise um einen Leitungsschutzschalter, eine Überstromschutzeinrichtung für die Steuer- und Kommunikationstechnik, ein Leistungsmessgerät, einen WLAN-Adapter, ein Funkmodul bzw. einen Antennenstrahler mit oder ohne integriertem Funkmodul handeln.

Die Unterseite der elektrotechnischen Komponente 5 kann mit Mitteln versehen sein, die in ähnlicher Weise wie die kupplungsartigen Mittel zum elektrischen und mechanischen Verbinden der Überspannungsableiteranordnung mit dem Sammelschienensystem ausgeführt sind.

Die je nach Auslegung der Komponente 5 erforderliche Spannungsversorgung kann durch eine direkte Kontaktierung mit den Sammelschienen 1 erfolgen.

Sowohl die eigentliche Überspannungsableiteranordnung 2 als auch die elektrotechnische Komponente 5 können über eine Anzeigeeinrichtung 6, die unabhängig voneinander arbeiten, verfügen.

Der Freiraum 4 weist bevorzugt eine Kontur auf, die derjenigen der elektrotechnischen Komponente 5 komplementär ist, um eine eindeutige Lagezuordnung zu schaffen und eine Fehlinstallation zu vermeiden.

Obwohl in den Figuren 1 und 2 der Breitenrücksprung 3 nebst Freiraum 4 nur rechtsseitig dargestellt ist, kann ein ähnlicher Breitenrücksprung auch linksseitig am Gehäuse der Überspannungsableiteranordnung 2 vorgesehen sein.

Bei der Ausführungsform nach den Figuren 3 und 4 verfügt der Freiraum 4 über einen stufenförmigen Absatz 7.

Der stufenförmige Absatz 7 überdeckt ganz oder teilweise einen darunterliegenden Abschnitt der Stromschienen 1. Hierdurch ergibt sich eine elektrische Isolation, bedingt durch das Isolationsmaterial der Überspannungsableiteranordnung 2 und ein entsprechender Abstand hin zu den Stromschienen 1.

Im Bereich des stufenförmigen Absatzes 7 sind Mittel zum Befestigen der betreffenden elektrotechnischen Komponente 5 vorhanden.

Diese Mittel können beispielsweise als Kontur 8 ausgebildet sein, wobei die Kontur 8 im Längsschnitt im Wesentlichen der Gestalt einer an sich bekannten Hutschiene entspricht.

An der Unterseite, respektive der Bodenseite der elektrotechnischen Komponente 5, ist insofern ein komplementärer Rücksprung 9 vorhanden, um ein rastendes oder klemmendes, das heißt vorzugsweise formschlüssiges aber auch kraftschlüssiges Befestigen der elektrotechnischen Komponente 5 im Bereich des stufenförmigen Absatzes 7 unter Nutzung des oder der Mittel 8 zu realisieren.

Eine Spannungsversorgung der Komponente 5 kann bei dieser Ausführungsform durch eine Kontaktierung innerhalb der Ausbildung des stufenförmigen Absatzes 7 erfolgen. Durch eine interne Leitungsführung innerhalb des Überspannungsschutzgerätes 2 kann jedes beliebige Potential der Sammelschienen 1 an eine beliebige Position innerhalb der Aussparung 4 bzw. des stufenförmigen Absatzes 7 herausgeführt werden, ohne dass auf die Lage der genormten Sammelschienen Rücksicht genommen werden muss.

Wie aus den Darstellungen im Ergebnis der Zusammenschau der Figuren 3 und 4 ersichtlich, kann die elektrotechnische Komponente 5 seitlich auf ein Mittel 8 aufgeschoben werden, das eine schienenartige Gestalt besitzt.

Es ist dabei ebenso möglich, ein Einstecken quasi von oben hinein in den Freiraum 4 zu bewerkstelligen, was insbesondere dann von Vorteil ist, wenn eine Reihenanordnung mehrerer, benachbarter Überspannungsableiteranordnungen auf einem entsprechenden Sammelschienensystem vorliegt.

Die jeweilige elektrotechnische Komponente 5 kann bezogen auf den Freiraum 4 respektive den Breitenrücksprung 3 bündig mit der größten Oberflächenseite der Überspannungsableiteranordnung 2 abschließen, aber auch diesbezüglich hervorstehend realisiert werden, um insbesondere im Fall eines Austausches der elektrotechnischen Komponente 5 einen leichten Wechsel zu ermöglichen, und zwar weitgehend werkzeugfrei.

Obwohl ausgehend von der Umhüllenden einer Überspannungsableiteranordnung gemäß den Figuren 1 bis 4 das Innenvolumen des Gehäuses im Vergleich zu einer Ausführungsform ohne Freiraum und Breitenrücksprung um das Volumen des Freiraumes größer ist, gelingt es in überraschender Weise, alle notwendigen Ableiterkomponenten einschließlich interner Verdrahtung, Triggerung, Anzeigeeinrichtung, thermischer Abtrennvorrichtung und weiteren Teilen selbige im verbleibenden Volumen so unterzubringen, dass notwendige Trennungsabstände eingehalten werden und die Funktionalität der Überspannungsableiteranordnung unter allen Umständen gewährleistet bleibt.

## Patentansprüche

1. Überspannungsableiteranordnung mit in einem gemeinsamen Gehäuse befindlichen, vorkonfektionierten und elektrisch verschalteten Überspannungsableitern,
wobei zur unmittelbaren Montage auf einem standardisierten Sammelschienensystem mit mehreren Stromschienen (1) am Gehäuse kupplungsartige Mittel zum elektrischen und mechanischen Verbinden vorgesehen sind,
wobei diese Mittel Federelemente und eine Verrastung aufweisen und das Gehäuse sich in seiner Längsausdehnung über mehrere Stromschienen (1) erstreckt,
**dadurch gekennzeichnet, dass**
mindestens über einen Längsausdehnungsabschnitt des Gehäuses dieses einen Breitenrücksprung (3) aufweist, derart, dass ein Freiraum (4) gebildet ist, welcher mindestens eine von der Überspannungsableiteranordnung (2) funktional getrennte elektrotechnische Komponente (5) aufnehmen kann.

2. Überspannungsableiteranordnung nach Anspruch 1, **dadurch gekennzeichnet, dass** der Freiraum (4) bis zu den Stromschienen (1) führt, so dass die elektrotechnische Komponente (5) mit diesen verbindbar ist.

3. Überspannungsableiteranordnung nach Anspruch 1, **dadurch gekennzeichnet, dass** der Freiraum (4) über einen stufenförmigen Absatz (7) verfügt, welcher als Bestandteil des Gehäuses die Stromschienen (1) überdeckt, wodurch eine elektrische Isolation zu den Stromschienen (1) geschaffen ist.

4. Überspannungsableiteranordnung nach Anspruch 3, **dadurch gekennzeichnet, dass** im oder am stufenförmigen Absatz (7) Mittel (8) zum Befestigen der elektrotechnischen Komponente (5) vorgesehen sind.

5. Überspannungsableiteranordnung nach Anspruch 4, **dadurch gekennzeichnet, dass** das Mittel (8) als hutschienenähnliches Profil ausgebildet ist.

6. Überspannungsableiteranordnung nach einem der vorangegangenen Ansprüche, **dadurch gekennzeichnet, dass** die elektrotechnische Komponente (5) als Leitungsschutzschalter, Leitungssicherungsautomat, Überstromschutzeinrichtung für die Steuer- und Kommunikationstechnik, Leistungsmessgerät, WLAN-Adapter, Funkmodul und/oder Antennenstrahler ausgebildet ist.

7. Überspannungsableiteranordnung nach einem der vorangegangenen Ansprüche, **dadurch gekennzeichnet, dass** mehrere derartige Anordnungen auf dem Sammelschienensystem aneinander anreihbar ausgeführt sind, wobei die jeweiligen Freiräume (4) ein Einstecken der jeweiligen elektrotechnischen Komponente (5) von oben in den Freiraum (4) hinein ermöglichen.

8. Überspannungsableiteranordnung nach einem der vorangegangenen Ansprüche, **dadurch gekennzeichnet, dass** die eingesetzten elektrotechnischen Komponenten (5) mit der jeweiligen Gehäusekontur oberseitig bündig abschließen.

9. Überspannungsableiteranordnung nach einem der Ansprüche 1 bis 7, **dadurch gekennzeichnet, dass** die eingesetzten elektrotechnischen Komponenten (5) bezogen auf die oberseitige Gehäusekontur überstehen, um eine einfache Betätigung oder einen einfachen Austausch zu ermöglichen.

10. Überspannungsableiteranordnung nach einem der vorangegangenen Ansprüche, **dadurch gekennzeichnet, dass** der jeweilige Freiraum (4) eine Gestalt aufweist, welche der Kontur der elektrotechnischen Komponente (5) komplementär ist, so dass eine räumlich geometrische eindeutige und korrekte Zuordnung beim Einbringen der jeweiligen elektrotechnischen Komponente (5) in den jeweiligen Freiraum (4) gegeben ist.

11. Überspannungsableiteranordnung nach einem der vorangegangenen Ansprüche, **dadurch gekennzeichnet, dass** der Breitenrücksprung (3) zur Bildung des Freiraumes (4) beidseitig am Gehäuse vorgesehen ist.

## Claims

1. A surge arrester arrangement with pre-assembled and electrically connected surge arresters located in a common housing,
wherein coupling-type means for electrical and mechanical connection are provided on the housing for direct mounting on a standardized busbar system with a plurality of busbars (1),
wherein these means include spring elements and a latching mechanism and the housing extends in its longitudinal extension over a plurality of busbars (1),
**characterized in that**
at least over one longitudinal extension section of the housing, the latter includes a width recess (3) such that a free space (4) is formed which can accommodate at least one electrotechnical component (5) which is functionally separate from the surge arrester arrangement (2).

2. The surge arrester arrangement according to claim 1, **characterized in that** the free space (4) leads up to the busbars (1), so that the electrotechnical component (5) can be connected to these.

3. The surge arrester arrangement according to claim 1, **characterized in that** the free space (4) is provided with a step-shaped shoulder (7) which, as part of the housing, covers the busbars (1), thereby creating electrical insulation from the busbars (1).

4. The surge arrester arrangement according to claim 3, **characterized in that** means (8) for fastening the electrotechnical component (5) are provided in or on the step-shaped shoulder (7).

5. The surge arrester arrangement according to claim 4, **characterized in that** the means (8) is designed as a profile similar to a top-hat rail.

6. The surge arrester arrangement according to any of the preceding claims, **characterized in that** the electrotechnical component (5) is designed as a circuit breaker, automatic circuit breaker, overcurrent protection device for control and communication technology, power meter, WLAN adapter, radio module and/or antenna radiator.

7. The surge arrester arrangement according to any of the preceding claims, **characterized in that** a plurality of such arrangements are designed to be arranged in series on the busbar system, the respective free spaces (4) enabling the respective electrotechnical component (5) to be plugged into the free space (4) from above.

8. The surge arrester arrangement according to any of the preceding claims, **characterized in that** the inserted electrotechnical components (5) are flush with the top of the respective housing contour.

9. The surge arrester arrangement according to any of claims 1 to 7, **characterized in that** the inserted electrotechnical components (5) protrude with respect to the top-side housing contour in order to enable simple actuation or simple replacement.

10. The surge arrester arrangement according to any of the preceding claims, **characterized in that** the respective free space (4) has a shape which is complementary to the contour of the electrotechnical component (5), so that a spatially geometrical unambiguous and correct assignment is given when the respective electrotechnical component (5) is introduced into the respective free space (4).

11. The surge arrester arrangement according to any of the preceding claims, **characterized in that** the width recess (3) for forming the free space (4) is provided on both sides of the housing.

## Revendications

1. Dispositif de protection contre les surtensions avec des parasurtenseurs des parafoudres pré-assemblés et câblés électriquement,
des moyens de couplage pour la connexion électrique et mécanique étant prévus sur le boîtier pour le montage direct sur un système de barres omnibus standardisé avec plusieurs barres omnibus (1),
ces moyens comprenant des éléments à ressort et un dispositif de verrouillage, et le boîtier s'étendant dans le sens de la longueur sur plusieurs barres omnibus (1),
**caractérisé en ce que**
le boîtier présente un retrait en largeur (3) au moins sur une partie de son extension longitudinale, de telle sorte qu'un espace libre (4) est formé, lequel reçoit au moins un composant électrotechnique (5) séparé fonctionnellement du dispositif de dérivation de surtension (2).

2. Dispositif de dérivation de surtension selon la revendication 1, **caractérisé en ce que** l'espace libre (4) mène jusqu'aux barres conductrices (1), de sorte que le composant électrotechnique (5) peut être relié à celles-ci.

3. Dispositif de dérivation de surtension selon la revendication 1, **caractérisé en ce que** l'espace libre (4) dispose d'un décrochement en forme de marche (7) qui, en tant que partie intégrante du boîtier, recouvre les barres conductrices (1), créant ainsi une isolation électrique par rapport aux barres conductrices (1).

4. Dispositif de protection contre les surtensions selon la revendication 3, **caractérisé en ce que** des moyens (8) sont prévus dans ou sur le décrochement en forme de marche (7) pour fixer le composant électrotechnique (5).

5. Dispositif de protection contre les surtensions selon la revendication 4, **caractérisé en ce que** le moyen est conçu comme un profilé (8) semblable à un rail DIN.

6. Dispositif de protection contre les surtensions selon l'une des revendications précédentes, **caractérisé en ce que** le composant électrotechnique (5) est conçu comme un disjoncteur de protection de ligne, un coupe-circuit automatique, un dispositif de protection contre les surintensités pour la technique de commande et de communication, un appareil de mesure de puissance, un adaptateur WLAN, un module radio et/ou un émetteur d'antenne ou un dispositif similaire.

7. Dispositif de dérivation de surtension selon l'une des revendications précédentes, **caractérisé en ce que** plusieurs dispositifs de ce type peuvent être alignés sur le système de barres omnibus, les espaces libres respectifs (4) permettant d'insérer le composant électrotechnique respectif (5) par le haut dans l'espace libre (4).

8. Dispositif de protection contre les surtensions selon l'une des revendications précédentes, **caractérisé en ce que** les composants électrotechniques (5) utilisés affleurent le contour du boîtier respectif sur la face supérieure.

9. Dispositif de protection contre les surtensions selon l'une des revendications 1 à 7, **caractérisé en ce que** les composants électrotechniques (5) utilisés dépassent du contour du boîtier sur la face supérieure afin de permettre une manipulation ou un remplacement facile.

10. Dispositif de dérivation de surtension selon l'une des revendications précédentes, **caractérisé en ce que** l'espace libre respectif (4) présente une forme complémentaire au contour du composant électrotechnique (5), de sorte qu'une affectation géométrique spatiale univoque et correcte est donnée lors de l'insertion du composant électrotechnique respectif (5) dans l'espace libre respectif (4).

11. Dispositif de dérivation de surtension selon l'une des revendications précédentes, **caractérisé en ce que** le retrait de largeur (3) pour former l'espace libre (4) est prévu des deux côtés du boîtier.
